# EUROPÄISCHE PATENTSCHRIFT

(11) **EP 1 355 843 B1**
(45) Veröffentlichungstag und Bekanntmachung des Hinweises auf die Patenterteilung: **24.05.2006**
(21) Anmeldenummer: 01995630.9
(22) Anmeldetag: 08.11.2001
(51) Int. Cl.: B65H 19/10, C09J 7/02

(54) **KLEBEBAND FÜR DEN FLIEGENDEN ROLLENWECHSEL**
ADHESIVE TAPE FOR A CONTINUOUS ROLL CHANGE
BANDE ADHESIVE DESTINEE AU REMPLACEMENT DE ROULEAU AUTOMATIQUE

(30) Priorität: 28.11.2000 DE 10058956
(43) Veröffentlichungstag der Anmeldung: 29.10.2003
(73) Patentinhaber: tesa AG, 20253 Hamburg (DE)
(72) Erfinder: EIKMEIER, Markus, 23738 Lensahn (DE); GASSNER, Thomas, 25436 Heidgraben (DE); NAGEL, Christoph, 20257 Hamburg (DE)
(86) Internationale Anmeldenummer: PCT/EP2001/012919
(87) Internationale Veröffentlichungsnummer: WO 2002/044062

(56) Entgegenhaltungen:
- DE-A- 19 902 179
- DE-C- 4 318 277

## Beschreibung

Die Erfindung betrifft ein Klebeband für den fliegenden Rollenwechsel sowie ein Spliceverfahren unter Einsatz eines solchen Klebebandes, insbesondere in Papierveredelungsmaschinen, Druckmaschinen und dergleichen.

Der fliegende Rollenwechsel ist in Papierfabriken oder dergleichen ein gängiges Verfahren, um ohne die schnell laufenden Maschinen anhalten zu müssen, eine alte, fast abgespulte Papierrolle durch eine neue zu ersetzen. Dabei werden doppelseitig klebende Selbstklebebänder, sogenannte Fixe, eingesetzt, die einerseits hochklebrig und -tackig sind, andererseits aber aufgrund ihrer wasserlöslichen Selbstklebemassen und Papierträger beim Wiedereinsatz der Papierabfälle in der Papiermaschine nicht stören. Diese Fixe werden in aufwendigen Verklebungsmustern am Bahnanfang verklebt, eine Prozedur, die erfahrene Fachleute verlangt, wobei für den gesamten Arbeitsvorgang aufgrund der immer schneller laufenden Maschinen weniger Zeit bleibt.

Obgleich diese Technologie bewährt und eingespielt ist, hat sie doch einige Nachteile. So ist Fachpersonal nötig, Hektik ist vorgegeben und die Verklebungen sind auch relativ dick: Die max. Gesamtdicke der Verklebung ergibt sich aus zwei Papierlagen , dem dazwischen klebenden Fix-Klebeband und evt. Befestigungsetiketten. Das Bestreben der Papierindustrie ist es, diese Verklebungsdicke auf ein Minimum zu reduzieren.

Für traditionelle Verklebungsmethoden beim fliegenden Rollenwechsel gibt es diverse Produkte im Handel, sogenannte Fixe, die neben einem Papierträger eine wasserlösliche Selbstklebemasse beidseits beschichtet aufweisen. Solche Klebebänder sind u.a. unter der Bezeichnung tesafix (Beiersdorf) im Handel.

Im Stand der Technik sind vielfältige Klebebänder für derartige Zwecke beschrieben. So offenbart EP 418 527 A2 ein Verfahren zum Vorbereiten einer Rolle bahnförmigen Bedruckstoffs für automatische Rollenwechsler und einen dafür geeigneten Klebstreifen. Auch DE 40 33 900 A1 beschreibt ein für eine Splice-Stelle geeignetes Klebeband. Nachteilig sind jedoch klebende Bereiche, die nach erfolgtem Spliceverfahren offen liegen.

Das nichtklebende Abdecken von sonst offen liegenden klebenden Bereichen lehrt US 5,702,555 für mehr statische Belastungen einer Sicherung eines Rollenanfangs, während DE 196 32 689 A2 ein derartiges Klebeband für dynamische Belastung beim Spliceverfahren offenbart, dessen Papierträger spaltet und mit seinen Resten die Klebemassen abdeckt.

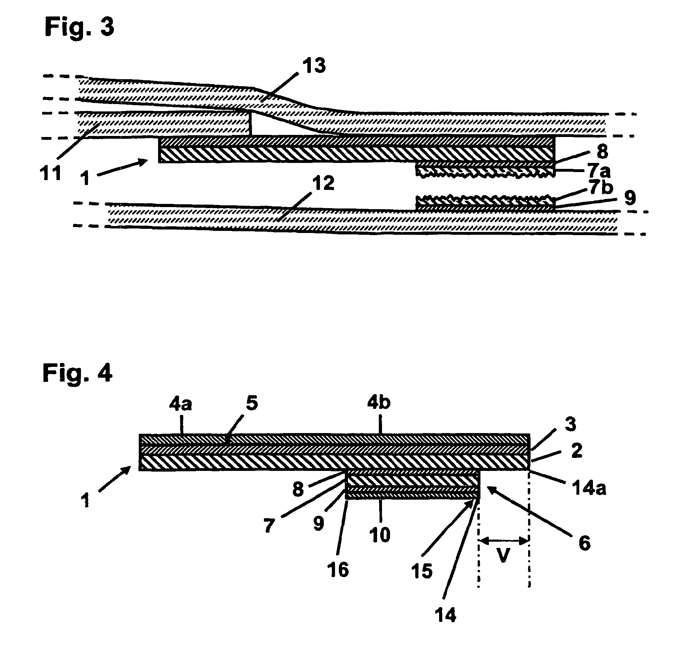

Von dieser Art ist auch ein Klebeband gemäß DE 196 28 317 A1, ebenfalls für ein Spliceverfahren. Dieses Klebeband trägt an seiner nichtklebenden Rückseite ein doppelseitig klebendes Klebeband (6), das einen spaltfreudigen Papierträger (7) aufweist, der beim Spliceverfahren spaltet (7a, 7b, Fig. 3) und die jeweiligen Kleber abdeckt. Dieses doppelseitig klebende Klebeband (6) schließt seitlich mit der einen Seite des Papierträgers (2) ab, ist also längs einer der Längskanten des Klebebandes angeordnet.

Aus DE 199 02 179 A1 ist zudem ein Klebeband für diese Anwendung bekannt, bei dem zur Vermeidung von Reißern beim fliegenden Rollenwechsel ein aufkaschiertes Klebeband mit Papierträger (P2) aus Spaltpapier eingerückt angeordnet ist, nämlich in einem gewissen Abstand (V) von der Längskante (LK) des Klebebandes.

In der Praxis zeigen sich auch bei diesen Klebebändern Nachteile, zunächst dadurch, dass ein fliegender Rollenwechsel nicht gelingt, vielmehr als Reißer endet, ohne dass ein Grund dafür ersichtlich wäre.

Aufgabe der Erfindung war es, hier Abhilfe zu schaffen.

Gelöst wird dies durch ein Klebeband und Spliceverfahren, wie dies im Einzelnen in den Ansprüchen näher gekennzeichnet ist.

Entsprechend betrifft die Erfindung ein Klebeband für den fliegenden Rollenwechsel, mit
a) zwei Längskanten (14,16), einer Oberseite und einer Unterseite,
b) einem Spaltträger (7),
c) einer Selbstklebemasse (8) auf der Oberseite des Spaltträgers (7) und
d) einer Selbstklebemasse (9) auf der Unterseite des Spaltträgers (7),
   wobei
e) mindestens diejenige der Längskanten (14), an der beim fliegenden Rollenwechsel das Spalten des Spaltträgers (7) beginnt (Vorderkante), einen Zackenschnitt (15) aufweist.

Zwar ist der Zackenschnitt als solcher bekannt und wird insbesondere eingesetzt, um damit ausgerüstete Produkte handeinreißbar zu machen, etwa bei Textilen oder auch bei Klebebändern, vgl. DE 43 18 277 C1. Diese Eigenschaft der leichteren Einreißbarkeit von Hand musste aber geradezu von erfindungsgemäßen Einsatz eines Zackenschnitts ablenken, da bei den hohen Geschwindigkeiten und den hohen Kräften, die beim fliegenden Rollenwechsel auftreten, mit ungewollten und ggf. vorzeitigen Reißern gerechnet werden musste, zumal DE 199 02 179 A1 ausdrücklich "saubere Schnittkanten" empfiehlt (S. 2, Z. 54).

Es zeigte sich jedoch, dass ein fliegender Rollenwechsel mit den erfindungsgemäßen Klebebändern durch den sehr geringen Anspaltkraftwert in der Zackenspitze und mit zunehmender Zackenfläche kontinuierlich ansteigendem Kraftwert zuverlässiger gelingt. Reißer werden damit wirksam vermieden.

Die Zackenhöhe des Zackenschnitts des erfindungsgemäßen Klebebandes beträgt bevorzugt 0,3 bis 20 mm, insbesondere 0,4 bis 5 mm, vor allem 0,5 mm. Der Spitzenwinkel einer Zacke des Zackenschnitts beträgt bevorzugt 80 bis 100°, insbesondere 90°.

Das Spaltpapier hat vorteilhaft einen deutlich kleineren Spaltwiderstand als ein Papierträger, der Zugkräfte aufnehmen muss.

Als Spaltträger (oder spaltfähiges System), insbesondere als Spaltpapiere kommen zum Beispiel folgende Papiere oder Papierverbundsysteme in Frage:
- Duplexpapiere (definiert zusammen laminierte Papiere, der Spaltvorgang verläuft extrem homogen, es entstehen keine Spannungsspitzen, z.B. durch inhomogene Verdichtung). Diese Papiere sind handelsüblich und werden z.B. bei der Herstellung von Filtermaterialien und Tapeten eingesetzt.
- Leicht spaltbare Papiere: Die Einstellung der Spaltarbeit erfolgt über die Verdichtung der Papierfaserstruktur. Je geringer die Verdichtung ist, desto geringer ist die Spaltbarkeit.
- Geleimte Papiersysteme: Die Spaltbarkeit wird über die Chemie des Haftleims eingestellt. Der Leim soll in das Papier nur unwesentlich eingedrungen sein.
- Definiert zusammen geleimte hochverdichtete Papiere (⇒ Papier mit einer hohen Spaltfestigkeit). Die Leimung kann beispielsweise mit Stärke, stärkehaltigen Derivaten, Tapetenkleister auf Basis von Methylcellulose (Methylan® , Henkel KGaA, Düsseldorf) aber auch auf Basis von Polyvinylalkoholderivaten erfolgen.

Zusätzlich geeignete Papiersysteme sind beispielsweise einseitig glatte Naturpapiere oder auch hochgefüllte Kraftpapiere.

Auch ein spaltendes System gemäß DE 198 41 609 A1 kann eingesetzt werden.

Die Spaltfestigkeit des Spaltträgers (7) beträgt bevorzugt 20 bis 70 cN/cm, insbesondere 22 bis 60 cN/cm.

Bei einer vorteilhaften Ausführungsform der Erfindung ist auf die Selbstklebemasse (8) der Oberseite des Spaltträgers (7) ein weiteres Klebeband mit einem Träger (2) an dessen Unterseite aufkaschiert, welcher auf seiner Oberseite mit einer Selbstklebemasse (3) beschichtet ist. Bevorzugt ist das aufkaschierte Klebeband mit dem Träger (2) breiter als das Klebeband mit dem Spaltträger (7) und überragt dieses im Bereich der Vorderkante derart, dass zwischen der Vorderkante (14a) des aufkaschierten Klebebandes und der Vorderkante (14) des Klebebandes mit dem Spaltträger (7) ein Abstand V von 0 bis 15 mm geschaffen wird.

Die vorteilhafte Einrückung des spaltbaren Materials bzw. der Abstand von der Längskante soll bevorzugt etwa 0,5 - 15 mm betragen, insbesondere 1 - 7 mm und ganz besonders 1,5 mm - 3,5 mm.

Bevorzugt ist der Träger (2) des aufkaschierten Klebebandes ein reißfester Papier- oder Folienträger.

Vorteilhaft ist die offen liegende Selbstklebemasse (3) des aufkaschierten Klebebandes mit einer Abdeckung (4) versehen, die ggf. mit einer Perforation oder einem Schlitz (5) in Längsrichtung (parallel zu den Längskanten 14, 16) versehen ist.

Die Breite des Trägers aus Spaltpapier beträgt bevorzugt 3 - 20 mm, insbesondere 6 - 12 mm.

Als Selbstklebemassen kommen alle Basistypen von Haftklebemasse in Frage, insbesondere
- Acrylate (wasserlöslich und nicht wasserlöslich)
- Naturkautschukmassen, Synthesekautschukmassen
- und deren Dispersionen

Das Spliceverfahren, hier die Verklebung mit dem Splicetape kann insbesondere so erfolgen, dass das Klebeband rechtwinklig zur laufenden Bahn verklebt wird

Die Zeichnungen zeigen eine schematische Darstellung eines erfindungsgemäßen Klebebandes und seine Anwendung und sollen die Erfindung damit beispielhaft erläutern.

Zur Spaltfestigkeit und ihrer Messung wird auf DE 199 02 179 A1 verwiesen, auch zu den einsetzbaren Materialien, insbesondere Papiere und Klebmassen.

Geeignet sind ferner Ausgestaltungen, wie sie in DE 198 30 674, DE 198 30 673 und DE 196 28 317 A1 beschrieben sind, aber auch gemäß DE 196 32 689. Auf diese Druckschriften wird daher ausdrücklich Bezug genommen. Besonders bevorzugt aber ist eine Ausgestaltung gemäß DE 199 02 179 A1.

Im folgenden soll die Erfindung anhand eines Ausführungsbeispiels näher beschrieben werden, ohne sie damit aber unnötig einschränken zu wollen. Es zeigen:

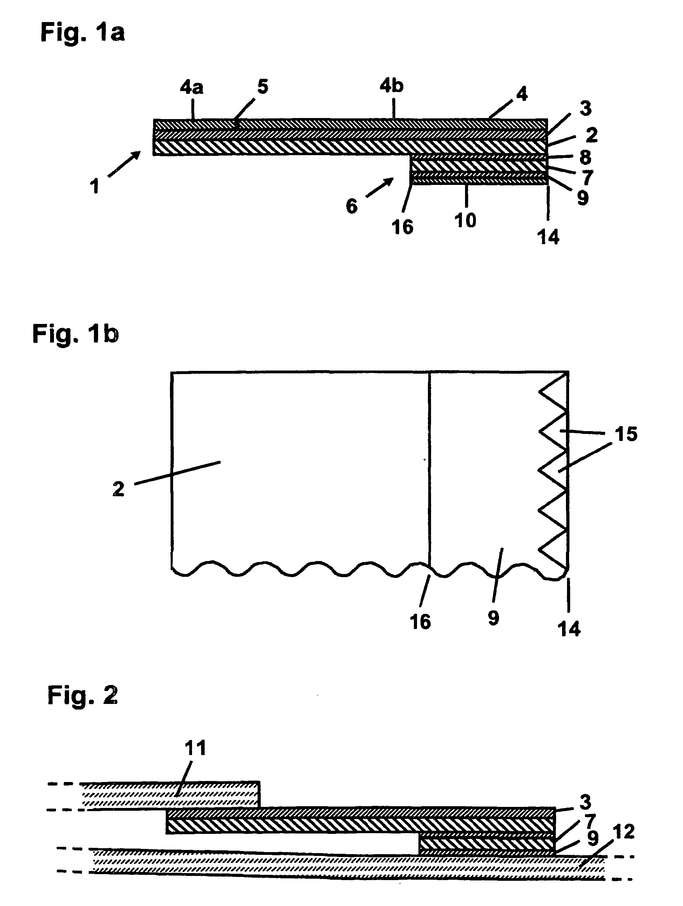

Fig. 1a eine seitliche, schematische Ansicht eines erfindungsgemäßen Klebebandes,
Fig. 1 b eine Draufsicht auf ein Klebeband gem. Fig. 1a von unten,
Fig. 2 eine seitliche, schematische Ansicht eines Klebebandes gem. Fig. 1, aufgeklebt auf eine Papierrolle und fertig für einen fliegenden Rollenwechsel, und
Fig. 3 eine Ansicht gem. Fig. 2, aber nach erfolgtem fliegenden Rollenwechsel.
Fig. 4 eine seitliche, schematische Ansicht einer weiteren, bevorzugten Ausführungsform eines erfindungsgemäßen Klebebandes.

Im einzelnen zeigen Fig. 1a und 1 b ein Klebeband 1 mit einem Träger 2 aus schwachgekrepptem Papier, einseitig beschichtet mit einer wasserlöslichen Selbstklebemasse 3. Die Gesamtdicke des Trägers 2 mit Selbstklebemasse 3 beträgt 0,088 mm, die Breite 150 mm, im Handel als tesakrepp 51447 Beiersdorf, Deutschland. Abgedeckt ist die Selbstklebemasse 3 mit einem silikonisierten Trennpapier 4, das in 30 mm Abstand vom linken Rand mit einem Schlitz 5 versehen ist, so dass zunächst der linke Teil des Trennpapiers 4 abgenommen werden kann, dann der rechte Teil. Am rechten Ende des Klebebandes 1 ist ein doppelseitig klebendes Klebeband 6 unterklebt, bestehend aus einem Papierträger 7 aus Spaltpapier, beidseits beschichtet mit wasserlöslicher Selbstklebemasse 8 bzw. 9. Das Klebeband 6 hat eine Breite von 9 mm. Die Selbstklebemasse 9 trägt ein Trennpapier.

Die rechte Längskante 14 (beim Spleißen die Vorderkante, an der das Spalten des Papierträgers 7 beginnt), weist einen Zackenschnitt 15 auf, während die linke Längskante 16 glatt geschnitten ist. Bezüglich des Zackenschnitts 15 und der dazu eingesetzten Messer wird auf DE 43 18 277 C1 verwiesen. Erfindungsgemäß wurde konkret eine beispielhafte Zackenhöhe von 0,5 mm gewählt, der Spitzenwinkel betrug 90°.

In Fig. 2 ist dargestellt, wie ein solches Klebeband 1 hinter eine Papierbahn 11 geklebt ist, und zwar mit dem linken Teil, nachdem von diesem der Teil des Trennpapiers 4a abgezogen wurde. Vorher wurde das Klebeband mit der freiliegenden Selbstklebemasse 9 auf die unter der Papierbahn 11 liegende Papierbahn 12 einer Papierrolle verklebt. Auch der rechte Teil 4b des Trennpapiers 4 wurde abgezogen, so dass die so ausgerüstete Papierrolle fertig für einen fliegenden Rollenwechsel ist, wobei die Verklebung des Klebebandes 1 im rechten Winkel über die Rolle läuft.

Die Selbstklebemasse 3 liegt nun offen und stellt für den fliegenden Wechsel die Kontaktfläche zu ablaufenden Bahn dar. Die Kontaktfläche hat eine Breite von 120 mm und erstreckt sich über die gesamte Breite der Papierrolle.

Die so ausgerüstete (neue) Papierrolle wird neben die abgewickelte (alte) Papierrolle gebracht, an die die neue angesetzt werden soll. Die neue Papierrolle wird auf eine Drehgeschwindigkeit beschleunigt, die der Geschwindigkeit der ablaufenden Bahn nahezu entspricht. Sind beide Geschwindigkeiten ausreichend synchronisiert, kann der Wechsel vollzogen werden: Die ablaufende Bahn wird mittels Andruckwelle mit dem Umfang der neuen Rolle in Kontakt gebracht, die Selbstklebemasse 3 verklebt gem. Fig. 3 mit der ablaufenden Papierbahn 13. Augenblicklich nach dem Klebekontakt spaltet der spaltfreudige Papierträger 7 derart, dass ein Teil 7a auf dem Klebeband 1 verbleibt und dort die Selbstklebemasse 8 abdeckt, während der andere Teil 7b auf der Selbstklebemasse 9 verbleibt, welche auf der Papierbahn 12 klebt. Damit sind beide Selbstklebemasse 8 und 9 gewissermaßen neutralisiert, kleben nicht mehr und stören damit auch nicht im weiteren Prozess in den Papierverarbeitungmaschinen.

Figur 4 zeigt ein Klebeband 1 ähnlich dem gemäß Fig. 1, auf alle Bezugszeichen dort wird Bezug genommen, jedoch ist der Papierträger 7 mit Selbstklebemasse 8 bzw. 9 mit Trennpapier 10 (insg. Klebeband 6) von der Längskante um 14 mm dem Abstand V eingerückt angeordnet, weist aber ebenso wie gemäß Fig. 1 einen Zackenschnitt 15 auf.

## Patentansprüche

1. Klebeband für den fliegenden Rollenwechsel, mit
a) zwei Längskanten (14, 16), einer Oberseite und einer Unterseite,
b) einem Spaltträger (7),
c) einer Selbstklebemasse (8) auf der Oberseite des Spaltträgers (7) und
d) einer Selbstklebemasse (9) auf der Unterseite des Spaltträgers (7),
**dadurch gekennzeichnet, dass**
e) mindestens diejenige der Längskanten (14), an der beim fliegenden Rollenwechsel das Spalten des Spaltträgers (7) beginnt (Vorderkante), einen Zackenschnitt (15) aufweist.

2. Klebeband nach Anspruch 1, **dadurch gekennzeichnet, dass** die Zackenhöhe des Zackenschnitts (15) 0,3 -20mm, insbesondere 0,4 - 5mm, vor allem 0,5 mm beträgt.

3. Klebeband nach Anspruch 1, **dadurch gekennzeichnet, dass** der Spitzenwinkel einer Zacke des Zackenschnitts (15) 80 - 100°, insbesondere 90° beträgt.

4. Klebeband nach Anspruch 1, **dadurch gekennzeichnet, dass** auf die Selbstklebemasse (8) der Oberseite des Spaltträgers (7) ein weiteres Klebeband mit einem Träger (2) an dessen Unterseite aufkaschiert ist, welcher auf seiner Oberseite mit einer Selbstklebemasse (3) beschichtet ist.

5. Klebeband nach Anspruch 4, **dadurch gekennzeichnet, dass** das aufkaschierte Klebeband mit dem Träger (2) breiter als das Klebeband mit dem Spaltträger (7) ist und dieses im Bereich der Vorderkante (Längskante 14) derart überragt, dass zwischen der Vorderkante (14a) des aufkaschierten Klebebandes und der Vorderkante (14) des Klebebandes mit dem Spaltträger (7) ein Abstand V von 0 - 15 mm, insb. 0,5 - 15 mm, insb. 1 - 7 mm ganz besonders 1,5 - 3,5 mm geschaffen wird.

6. Klebeband nach Anspruch 5, **dadurch gekennzeichnet, dass** das aufkaschierte Klebeband mit dem Träger (2) mindestens 2 mal so breit ist, wie das Klebeband mit dem Spaltträger (7).

7. Klebeband nach Anspruch 4, **dadurch gekennzeichnet, dass** der Träger (2) ein reißfester Papier- oder Folienträger ist.

8. Klebeband nach einem der Ansprüche 1 - 7, **dadurch gekennzeichnet, dass** die Selbstklebemassen (8, 9, 3) Acrylatklebemassen (wasserlöslich/ nicht wasserlöslich) Naturkautschuk und Synthesekautschuk und deren Dispersionen sind.

9. Klebeband nach einem der Ansprüche 4 - 8, **dadurch gekennzeichnet, dass** die offen liegende Selbstklebemasse 3 des aufkaschierten Selbstklebebandes mit einer Abdeckung 4 versehen ist, die ggf. mit einer Perforation oder einem Schlitz (5) in Längsrichtung (parallel zu den Längskante 14, 16) versehen ist.

10. Klebeband nach einem der Ansprüche 1 - 9, **dadurch gekennzeichnet, dass** die Spaltfestigkeit des Spaltträgers (7) 20 bis 70 cN/cm, insbesondere 22 bis 60 cN/cm beträgt.

11. Spliceverfahren, bei dem der obersten Bahn einer Rolle ein Klebeband nach einem der Ansprüche 1 - 10 teilweise hinterklebt wird, während die Unterseite des Klebebandes mit der darunter liegenden Bahn verklebt und damit die oberste Bahn sichert, wobei gegebenenfalls zunächst nur ein Teil der gegebenenfalls auf der Selbstklebemasse befindlichen Abdeckung abgezogen wurde, so dass der zum Spliceverfahren benötigte Teil der Selbstklebemasse noch mit Abdeckung abgedeckt ist und die Rolle in diesem Zustand keine freie klebende Fläche aufweist, worauf zur abschließenden Vorbereitung des Spliceverfahrens die gegebenenfalls noch vorhandene restliche Abdeckung entfernt wird, worauf die so ausgerüstete neue Rolle neben eine fast gänzlich abgespulte, zu ersetzende alte Rolle plaziert wird und auf die gleiche Drehgeschwindigkeit wie diese beschleunigt wird, dann gegen die alte Bahn gedrückt wird, wobei die offenliegende Selbstklebemasse des Klebebandes mit der alten Bahn bei im wesentlichen gleichen Geschwindigkeiten der Bahnen verklebt, während zugleich der Spaltträger aus spaltfähigem Material spaltet und beide Selbstklebemassen, die auf ihm beschichtet waren, mit seinen Resten nichtklebend abdeckt.

12. Spliceverfahren nach Anspruch 11, **dadurch gekennzeichnet, dass** das Klebeband rechtwinklig zur laufenden Bahn verklebt wird.

## Claims

1. Adhesive tape for flying splice, having
a) two long edges (14, 16) of a top side and of a bottom side,
b) a cleavable backing (7),
c) a self-adhesive composition (8) on the top side of the cleavable backing (7) and
d) a self-adhesive composition (9) on the bottom side of the cleavable backing (7),
**characterized in that**
e) at least the one of the long edges (14) at which the cleaving of the cleavable backing (7) begins during flying splice (front edge) exhibits a jagged cut (15).

2. Adhesive tape of Claim 1, **characterized in that** the jag height of the jagged cut (15) is 0.3 -20 mm, in particular 0.4 - 5 mm, especially 0.5 mm.

3. Adhesive tape of Claim 1, **characterized in that** the tip angle of a jag of the jagged cut (15) is 80 -100°, particularly 90°.

4. Adhesive tape of Claim 1, **characterized in that** laminated to the self-adhesive composition (8) of the top side of the cleavable backing (7) there is a further adhesive tape with a backing (2), lamination taking place to its bottom side, which is coated on its top side with a self-adhesive composition (3).

5. Adhesive tape of Claim 4, **characterized in that** the adhesive tape laminated on, with the backing (2), is wider than the adhesive tape having the cleavable backing (7) and overhangs it in the region of the front edge (long edge 14) in such a way that a distance V of 0.5 - 15 mm, in particular 1 - 7 mm, and very particularly 1.5 - 3.5 mm, is created between the front edge (14a) of the adhesive tape laminated on and the front edge (14) of the adhesive tape with the cleavable backing (7).

6. Adhesive tape of Claim 5, **characterized in that** the adhesive tape laminated on, with the backing (2), is at least 2 times as wide as the adhesive tape with the cleavable backing (7).

7. Adhesive tape of Claim 4, **characterized in that** the backing (2) is a paper backing or film backing of high tensile strength.

8. Adhesive tape of one of Claims 1 - 7, **characterized in that** the self-adhesive compositions (8, 9, 3) are acrylate adhesives (water-soluble/water-insoluble) natural rubber and synthetic rubber and dispersions thereof.

9. Adhesive tape of one of Claims 4 - 8, **characterized in that** the exposed self-adhesive composition (3) of the self-adhesive tape laminated on is provided with a liner (4), which is provided, where appropriate, with a perforation or a slit (5) in the lengthwise direction (parallel to the long edges 14, 16).

10. Adhesive tape of one of Claims 1 - 9, **characterized in that** the cleavage strength of the cleavable backing (7) is from 20 to 70 cN/cm, in particular from 22 to 60 cN/cm.

11. Splice method in which an adhesive tape of one of Claims 1 - 10 is bonded partly behind the topmost web of a roll, while the bottom side of the adhesive tape bonds to the underlying web and thus secures the topmost web, with where appropriate first only part of the liner optionally present on the self-adhesive composition being removed, so that the portion of the self-adhesive composition required for the splice method is still covered with liner and the roll in this state has no free adhesive area, whereupon any remaining liner is removed for the final preparation for the splice method, whereupon the new roll thus equipped is placed adjacent to an almost completely unwound old roll to be replaced, and is accelerated to the same rotational speed as the latter, then is pressed against the old web, the exposed self-adhesive composition of the adhesive tape bonding to the old web with the speeds of the webs being substantially the same, while at the same time the cleavable backing made of cleavable material cleaves and, with its residues, nonadhesively covers both of the self-adhesive compositions with which it was coated.

12. Splice method of Claim 11, **characterized in that** the adhesive tape is bonded at right angles to the running web.

## Revendications

1. Ruban adhésif pour le remplacement de rouleaux à la volée, qui comprend:
a) deux bords longitudinaux (14, 16), un côté supérieur et un côté inférieur,
b) un support refendable (7),
c) une pâte auto-adhésive (8) placée sur le côté supérieur du support refendable (7) et
d) une pâte auto-adhésive (9) sur le côté inférieur du support refendable (7),
**caractérisé en ce que**
e) au moins le côté longitudinal 14) sur lequel le refendage du support refendable (7) commence (bord avant) lors d'un remplacement de rouleaux à la volée présente une découpe en dents de scie (15).

2. Ruban adhésif selon la revendication 1, **caractérisé en ce que** la hauteur des dents de la découpe en dents de scie (15) est de 0,3 à 20 mm, en particulier de 0,4 à 5 mm et surtout de 0,5 mm.

3. Ruban adhésif selon la revendication 1, **caractérisé en ce que** la pointe d'une dent de la découpe en dents de scie (15) forme un angle de 80 à 100° et en particulier de 90°.

4. Ruban adhésif selon la revendication 1, **caractérisé en ce qu'**un autre ruban adhésif qui présente un support (2) sur son côté inférieur et qui est recouvert sur son côté supérieur par une pâte auto-adhésive (3) est contrecollé sur la pâte auto-adhésive (8) du côté supérieur du support refendable (7).

5. Ruban adhésif selon la revendication 4, **caractérisé en ce que** le ruban adhésif contrecollé avec un support (2) est plus large que le ruban adhésif qui porte le support refendable (7) et en déborde dans la zone du bord avant (côté longitudinal 14) de telle sorte qu'entre le bord avant (14a) du ruban adhésif contrecollé et le bord avant (14) du ruban adhésif qui porte le support refendable (7), on obtienne une distance V de 0 à 15 mm, en particulier de 0,5 à 15 mm, en particulier de 1 à 7 mm et de façon tout particulièrement préférable de 1,5 à 3,5 mm.

6. Ruban adhésif selon la revendication 5, **caractérisé en ce que** le ruban adhésif contrecollé qui présente un support (2) est au moins 2 fois plus large que le ruban adhésif qui porte le support refendable (7).

7. Ruban adhésif selon la revendication 4, **caractérisé en ce que** le support (2) est un support en papier ou en film qui résiste à la déchirure.

8. Ruban adhésif selon l'une quelconque des revendications 1 à 7, **caractérisé en ce que** les pâtes auto-adhésives (8, 9, 3) sont des pâtes adhésives à l'acrylate (solubles ou insolubles), du caoutchouc naturel ou du caoutchouc de synthèse ainsi que leurs dispersions.

9. Ruban adhésif selon l'une quelconque des revendications 4 à 8, **caractérisé en ce que** la pâte auto-adhésive (3) exposée du ruban auto-adhésif contrecollé est dotée d'un recouvrement (4) qui est éventuellement doté de perforations ou d'une fente (5) dans le sens de sa longueur (parallèle aux bords longitudinaux 14, 16).

10. Ruban adhésif selon l'une quelconque des revendications 1 à 9, **caractérisé en ce que** la résistance au refendage du support refendable (7) est de 20 à 70 cN/cm et en particulier de 22 à 60 cN/cm.

11. Procédé de raccordement dans lequel un ruban adhésif selon l'une quelconque des revendications 1 à 10 est collé à des parties dorsales de la bande supérieure d'un rouleau, le côté inférieur du ruban adhésif étant collé à la bande située en dessous de lui et fixant ainsi la bande supérieure, seule une partie du recouvrement situé éventuellement sur la pâte auto-adhésive étant d'abord éventuellement enlevée de telle sorte que la partie de la pâte auto-adhésive nécessaire pour l'opération de raccordement soit encore recouverte par le recouvrement et que dans cet état, le rouleau ne présente pas de surface adhésive nue, le recouvrement résiduel éventuellement encore présent étant enlevé pour terminer la préparation de l'opération de raccordement, suite à quoi le nouveau rouleau ainsi apprêté est placé à côté d'un ancien rouleau presque complètement épuisé et à remplacer et est accéléré à la même vitesse de rotation que ce dernier pour ensuite être repoussé contre l'ancienne bande, la pâte auto-adhésive exposée du ruban adhésif se collant sur l'ancienne bande lorsque les bandes ont essentiellement la même vitesse, tandis qu'en même temps le support refendable en matériau refendable se refend et recouvre les deux pâtes auto-adhésives qui ont été appliquées sur lui par ses résidus en les rendant ainsi non adhésives.

12. Opération de raccordement selon la revendication 11, **caractérisée en ce que** le ruban adhésif est collé sur la bande perpendiculairement à sa direction d'avancement.
